# EUROPÄISCHE PATENTSCHRIFT

(11) **EP 1 832 689 B1**
(45) Veröffentlichungstag und Bekanntmachung des Hinweises auf die Patenterteilung: **03.11.2010**
(21) Anmeldenummer: 07004508.3
(22) Anmeldetag: 06.03.2007
(51) Int. Cl.: E03F 1/00, E03D 9/14

(54) **Unterdruckabwassereinrichtung**
Low pressure wastewater device
Dispositif d'épuration sous pression

(30) Priorität: 06.03.2006 DE 102006010569
(43) Veröffentlichungstag der Anmeldung: 12.09.2007
(73) Patentinhaber: Roediger Vacuum GmbH, 63450 Hanau (DE)
(72) Erfinder: Betz, Reinhold, 21255 Tostedt (DE)
(74) Vertreter: Stoffregen, Hans-Herbert

(56) Entgegenhaltungen:
- EP-A1- 0 333 045
- DE-A1-102004 031 460
- US-A- 4 184 506

## Beschreibung

Die Erfindung bezieht sich auf eine Unterdruckabwassereinrichtung zum Absaugen von an einem Entstehungsort, wie Sanitäreinrichtungen, insbesondere Toilettenschüssel, angefallenem Abwasser, wobei von dem Entstehungsort eine mit Unterdruck beaufschlagbare Unterdruckleitung ausgeht, in der ein Absaugventil angeordnet ist, und die Unterdruckleitung im Bereich des Entstehungsortes einen Querschnitt q₁ aufweist.

Eine entsprechende Unterdruckabwassereinrichtung in Form einer Toilettenanlage ist der EP-A-1 120 500 zu entnehmen. Vom Auslass der Toilettenschüssel geht eine Unterdruck-Absauglcitung aus, in der unmittelbar im Bereich der Toilettenschüssel ein Absperr- oder Absaugventil angeordnet ist. Über eine Unterdrucksteucrung wird das Absperrventil dann geöffnet, wenn in der Toilettenschüssel angesammeltes Abwasser wie Schwarzwasser abgesaugt werden soll.

Zum Transport des Abwassers ist es erforderlich, dass zusammen mit dem Abwasser eine bestimmte Menge an Luft durch das geöffnete Absaugventil in die Unterdruckleitung eingesaugt wird. In der Unterdruckleitung strömen sodann Abwasser und Luft zu einem Sammelbehälter einer Vakuumstation, in der über eine Vakuumpumpe in dem Sammelbehälter und damit in der Unterdruckleitung der zum Fördern erforderliche Unterdruck aufgebaut wird.

Das Öffnen und Schließen des Absaugventils führt zu einer häufig unerwünschten Geräuschbildung, insbesondere aufgrund der eingesaugten Luft. Um eine Reduzierung zu erreichen, wird nach der EP-B-1 013 838 (DE-T-699 14 168) vorgeschlagen, dass das Abwasser-Luft-Gemisch zunächst in einen ersten Zwischenbehälter gefördert wird, von dem aus das Abwasser zu einem weiteren Behälter gefördert wird. Sowohl in der Verbindung zu dem ersten Behälter als auch in der Verbindung zwischen dem ersten und dem zweiten Behälter ist jeweils ein Absaugventil angeordnet, die entgegengesetzt arbeiten, d. h. ist das eine Ventil geöffnet, ist das andere geschlossen und umgekehrt. Des Weiteren muss der zweite Behälter unter Atmosphärendruck stehen ungeachtet der Tatsache, dass die Verbindung zwischen dem ersten und zweiten Behälter über eine Leitung an eine Vakuumpumpe angeschlossen ist.

Die diesbezügliche Anlage ist konstruktiv aufwändig und arbeitet häufig nicht ordnungsgemäß aufgrund der nur ungenügend abzustimmenden Schaltzustände des ersten und zweiten Absaugventils.

Um eine Geräuscliminderung beim Spülen einer Vakuumtoilette nach der DE-C-42 01 986 zu erzielen, ist vorgesehen, dass von der das Toilettenbecken mit einem Sammelbehälter verbindenden und ein Absaugventil enthaltenden Verbindungsleitung ein Nebenstromventil ausgeht, durch das nur der zur Entleerung des Toilettenbeckens erforderliche Luftstrom durch das Toilettenbecken geleitet wird und der wesentliche zum Transport der Verunreinigung und der Spülflüssigkeit durch die Verbindungsleitung erforderliche Luftanteil über das Nebenstromventil zugeführt wird.

Bei einem Vakuumtoilettensystem nach der DE-T-698 13 150 erfolgt eine Geräuschreduzierung dadurch, dass drei Arbeitsventile vorgesehen sind, die über eine Steuerkurveneinrichtung gesteuert werden, die ihrerseits von einer Kolben-/Zylindereinrichtung gesteuert wird.

Übliche Spülwassertoiletten sind der US-A-200510188453 oder der JP-A-2003147841 zu entnehmen. Zur Geräuschminderung des zuzuführenden Spülwassers wird die hierzu erforderliche Leitung in einem zur Horizontalen geneigt verlaufenden Abschnitt in ihrem Querschnitt erweitert.

Aus DE 10 2004 031 460 A ist noch eine Vakuumtoilette bekannt, wobei ein Sammelbehälter in der Druckleitung angeordnet ist.

Der vorliegenden Erfindung liegt die Aufgabe zu Grunde, eine Abwassereinrichtung der eingangs genannten Art, insbesondere bestimmt für ein Toilettenbecken z. B. in einem sogenannten Toilettenhäuschen, so weiterzubilden, dass mit konstruktiv einfachen Maßnahmen eine Geräuschdämpfung beim Absaugen des Abwassers erfolgt.

Zur Lösung der Aufgabe sieht die Erfindung im Wesentlichen vor, dass zwischen dem Entstehungsort und dem Absaugventil ein Entspannungsbehälter angeordnet ist, dessen Querschnitt q₂ größer, insbesondere sehr viel größer als q₁ ist, wobei die Unterdruckleitung mit dem Entspannungsbehälter in dessen unterem Bereich verbunden ist.

Überraschenderweise hat sich gezeigt, dass dann, wenn unmittelbar nach dem Ort, an dem zum Fördern des Abwassers die erforderliche Luft angesaugt wird, ein Entspannungsbehälter in der Unterdruckleitung angeordnet wird, eine Geräuschreäuaierung auftritt, die im Bereich von zumindest 10 dB liegt. Somit sind zusätzliche Maßnahmen, insbesondere die nach dem Stand der Technik erforderlichen zwei Absaugventile und Zwischenbehälter nicht erforderlich, um eine Geräuscbreduzierung zu erreichen.

Vorzugsweise ist vorgesehen, dass der Entspannungsbehälter unmittelbar hinter dem Entstehungsort in der Unterdruckleitung angeordnet ist. Dies bedeutet bei einer Toilettenschüssel, dass von deren Auslass ein in den Entspannungsbehälter übergehender Anschluss als Abschnitt der Unterdruckleitung ausgeht.

In Weiterbildung ist vorgesehen, dass die Toilettenschüssel als Entstehungsort für das abzusaugende Abwasser im Bereich einer Trennwand eines Raumes angeordnet ist, dass in der oder zwischen der Trennwand und der Toilettenschüssel der Entspaimungsbehälter angeordnet ist und dass das Absaugventil im Bezug auf die Toilettenschüssel hinter der Trennwand angeordnet ist. Bevorzugterweise ist der Entspannungsbehälter jedoch in der Toilettenschüssel integriert. So kann z. B. der Auslauf derart gestaltet sein, dass sich die gewünschte Querschnitts- und damit Volumenvergrößerung ergibt.

Losgelöst hiervon sollte der Entspannungsbehälter eine im Schnitt viel- wie viereckige oder kreis- oder ovalförmige Geometrie, bevorzugterweise eine Zylinderform aufweisen, wobei deren Längsachse parallel zu den in diesen mündenden. Abschnitten der Unterdruckleitung verlauf. Dabei erstreckt sich die Längsachse horizontal oder in etwa horizontal.

Die in den Entspannungsbehälter mündenden Abschnitte der Unterdruckleitung gehen von jeweils einer Stirnfläche des Entspannungsbehälters aus, wobei insbesondere Sohlen der Abschnitte bündig oder in etwa bündig in Sohle des Entspannungsbehälters übergehen, also innere untere Begrenzungsfläche des Entspannungsbehälters bündig oder nahezu bündig in die jeweilige innere untere Begrenzungsfläche der angrenzenden Abschnitte der Unterdruckleitung übergehen. Die Sohlen verlaufen bevorzugterweise horizontal oder im Wesentlichen horizontal.

Insbesondere ergibt sich eine hohe Geräuschdämpfung dann, wenn der Querschnitt q₂ des Entspannungsbehälters in Bezug auf die Querschnittsfläche q₁ des angrenzenden Abschnitts der Unterdruckleitung beträgt in etwa 5 q₁≤q₂≤20 q₁, insbesondere 8 q₁ ≤ q₂ ≤ 13 q₁. Dabei verlaufen die Querschnittsflächen parallel zueinander und quer zur Längsachse der Unterdruckleitung bzw. des Entspannungsbehälters.

Allgemein kann gesagt werden, dass der Querschnitt q₂ beträgt in etwa q₂ ≥ 5 q₁, insbesondere etwa q₂ ≥ 10 q_{1.}

Volumenmäßig ergeben sich optimale Bedingungen dann, wenn das Volumen V des Entspannungsbehälters beträgt in etwa 5 q₁ x 2 d₁≤V≤ 15 q₁ x 4 d₁, insbesondere 10 q₁ x 2 d₁ ≤ V ≤ 10 q₁ x 3 d₁, wobei d₁ mittlerer Durchmesser der in den Entspannungsbehälter mündenden Abschnitte der Unterdruckleitung ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine Prinzipdarstellung eines Ausschnittes einer Unterdruckabwasseranlage und
- Fig. 2: einen Abschnitt der Unterdruckleitung der Anlage gemäß Fig. 1.

Die erfindungsgemäße Lehre soll anhand einer Unterdmckabwüsscreinächtung erläutert werden, mittels der ein Toilettenbecken 10 entleert wird, ohne dass hierdurch die erimdungsgemäßc Lehre eingeschränkt wird. Vielmehr gilt diese für alle Anwendungsfälle, in denen von einem Entstehungsort anfallendes Abwasser mittels eines Unterdruck-Abwasser-Systems abgesaugt werden soll.

Bei einem Unterdruck-Abwasser-System wird dann, wenn an einem Entstehungsort Abwasser angesammelt ist, dieses über eine Unterdruckleitung abgesaugt, in der ein Absaugventil angeordnet und zum Absaugen über eine Zeitspanne geöffnet wird. Dabei kann das Öffnen des Absaugventils nach Ansammeln einer vorher festgelegten Abwassercharge oder gezielt z. B. über eine Knopfsteuerung erfolgen. Die zum Fördern erforderliche Luft wird zusammen mit dem Abwasser oder nach diesem eingesaugt. In der Unterdruckleitung strömen Abwasser und Luft bis zu einem Sammelbehälter einer Unterdruckstation. In dem Sammelbehälter wird mittels einer Unterdruckquelle, die grundsätzlich zumindest eine Vakuumpumpe umfasst, ein Unterdruck aufrechterhalten. In Abhängigkeit vom Füllstand des Sammelbehälters wird sodann Abwasser zu einer Kläranlage abgefördert.

Beim Öffnen des Absaugventils und somit dem Ansaugen des Abwassers und der Luft tritt eine erhöhte Geräuschbildung auf, die erfindungsgemäß wie folgt unterbunden wird.

Das in der Toilettenschüssel 10 angesammelte Abwasser wird im Bodenbereich über einen Anschluss 12 über eine Unterdruckleitung 14 abgesaugt, in der sich ein Absaugventil 16 befindet. Die Unterdruckleitung 14 mündet in einer Hauptvakuumleitung 18, die zu einem nicht dargestellten Sammelbehälter führt, in dem über zumindest eine Vakuumpumpe ein Unterdruck gewünschter Größe aufrechterhalten wird.

Im Ausführungsbeispiel befindet sich die Toilettenschüssel 10 in unmittelbarer Nähe einer Wandung 19 bzw. ist an dieser aufgehängt. In der Wandung 19 befindet sich des Weiteren eine Knopfsteuerung 20, über die zum einen das Absaugventil 16 geöffnet wird und zum anderen ein Wasserventil 22 betätigt wird, um nach bzw. während des Absaugens des Abwassers aus der Toilettenschüssel 10 dieses zu spülen. Hierzu ist das Wasserventil 22 mit einem Wasseranschluss 24 verbunden, der über eine Leitung 25 mit Düsen 27 im oberen Rand der Toilettenschüssel 10 verbunden ist.

Das Betätigen des Absaugventils 16 erfolgt in gewohnter Weise über Unterdruck, der über Leitungsabschnitte 26, 28 mit der Hauptleitung 18 verbunden sind. Die Abschnitte 26, 28 werden über die Knopfsteuerung 20 verbunden oder voneinander getrennt. Um in hinreichendem Umfang einen erforderlichen. Unterdruck zur Verfügung zu haben, um das Absaugventil 36 ansteuern zu können, befindet sich in dem von der Hauptleitung 18 ausgehenden Abschnitt 26 ein sogenannter Vakumpuffer 30.

Bezüglich der Betätigung des Absaugventils 16 und der Ausbildung des Absaugventils 16 selbst wird auf hinreichend bekannte Techniken der Vakuumkanalisation verwiesen.

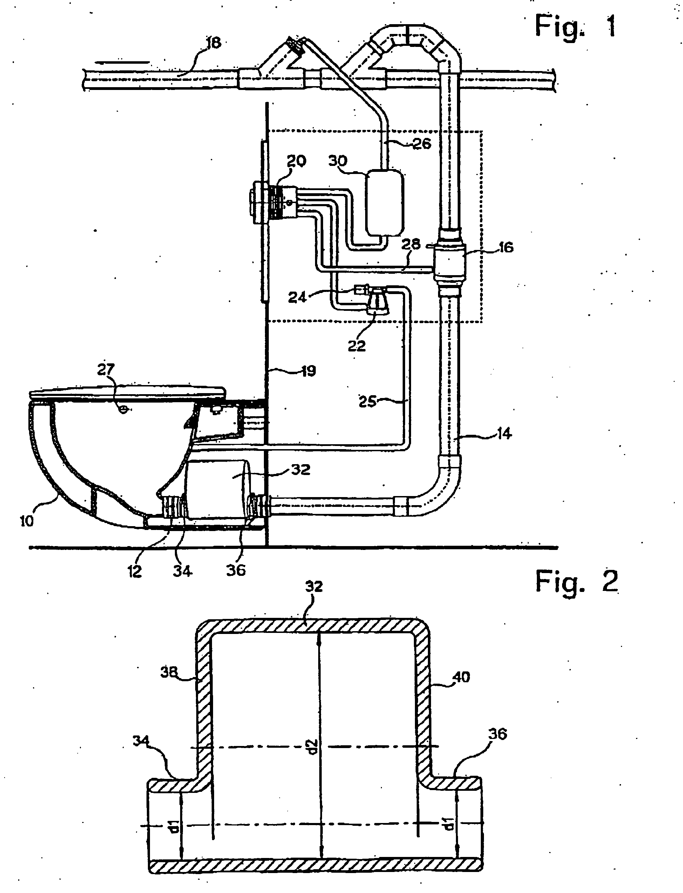

Um beim Absaugen des in der Toilettenschüssel 10 angefallenen Abwassers das durch das Ansaugen von Luft bedingte störende Geräusch zu reduzieren, ist unmittelbar im Bereich der Toilettenschüssel 10 und nach dem Anschluss 12 ein Entspannungsbehälter 32 angeordnet, dessen Querschnitt q₂ erheblich größer als der Querschnitt q₁ der Abschnitte 34, 36 ist, die als Abschnitte der Unterdruckleitung 14 in dem Entspannungsbehälter 32 münden. Prinzipielle Größenverhältnisse der Querschnitte und des sich hieraus ergebenden Volumens des Entspannungsbehälters 32 ergeben sich aus der Fig. 2.

Die Anschlüsse 34, 36 und somit prinzipiell auch die Unterdruckleitung 14 weisen quer zur Längsrichtung betrachtet einen Querschnitt q₁ auf. Der Entspannungsbehälter 32 weist in einer ebenfalls senkrecht zur Längsachse der Abschnitte 34, 36 betrachteten Ebene einen Querschnitt q₂ auf. Dabei ist bevorzugterweise der Querschnitt q₂ 5 bis 20, insbesondere 8 bis 13 Mal größer als der Querschnitt q₁. Bei kreisförmigen Querschnitten sowohl der Abschnitte 34, 36 als auch des Sammelbehälters 32 ist dessen Durchmesser d₂ in etwa 3 bis 4 Mal größer als d₁ mit d₁ als Durchmesser des Abschnittes 34 bzw. 36. Die Länge des Sammelbehälters 32 beträgt in etwa das 2,5 bis 3,5-fache des Durchmessers d₁ des Abschnitts 34 bzw. 36. Die diesbezüglichen Angaben sind jedoch rein beispielhaft, ohne die Erfindung einzuschränken.

Der Entspannungsraum 32 bewirkt, dass das störende Geräusch beim Absaugen des Abwassers und der Luft erheblich reduziert wird. Messungen haben ergeben, dass eine Geräuschminderung um 10 dB erfolgt.

Des Weiteren ergeben sich aus den zeichnerischen Darstellungen, dass die Unterdruckleitung 14 und damit die Abschnitte 34, 36 im Bodenbereich des Entspannungsbehälters 32 münden, wobei die Sohlen der Abschnitte 34, 36 bündig oder nahezu bündig in die Sohle des Entspannungsbehälters 32 übergehen. Die Abschnitte 34, 36 durchsetzen ferner die Stirnwandungen 38, 40 des Entspannungsbehälters 32.

Ausschlaggebend für die erfindungsgemäße Lehre dürfte sein, dass der Entspannungsbehälter 32 unmittelbar im Bereich des Ortes angeordnet ist, in dem die zum Fördern des Abwassers erforderliche Luft eingesaugt wird. Die Erfindung wird jedoch nicht verlassen, wenn der Abstand zwischen Einsaugort und Entspannungsbehälter 32 größer als zuvor erläutert ist, also z. B. im Ausführungsbeispiel jenseits der Trennwand 18.

Bevorzugterweise sollte der Entspanntmgsbehälter 32 in dem Toilettenbecken 12, und zwar insbesondere im Auslautbereich integriert sein.

Aus der Zeichnung wird des Weiteren deutlich, dass die Abschnitte 34, 36 der Saugleitung 14 mit Flüssigkeit gefüllt sein müssen, wenn ein. Absaugen nicht erfolgt. Um somit das in das Toilettenbecken 10 zuzuleitende Spülwasser zu minimieren, kann die Unterdruckleitung 14 unmittelbar nach der Trennwand 19 nach oben geführt werden. Unabhängig wird durch den Einbau des Entspannungsbehälters 32 die Menge des im Bodenbereich der Toilettenschüssel 10 und der angrenzenden Unterdrucklüftungsabschnitte 34, 36 sowie im Bodenbereich des Entspannungsbehältcrs 32 angesammelten Wassers in etwa 500 cm³ größer im Vergleich zu Unterdruck-Abwasser-Anlagen für Toilettenbecken ohne Entspannungsbehälter. Auch die größere Menge an angestautem Wasser kann zu einer Geräuschminderung beitragen.

## Patentansprüche

1. Unterdruckabwassereinrichtung zum Absaugen von an einem Entstehungsort (10), wie Sanitäreinrichtung, insbesondere Toilettenschüssel, anfallendem Abwasser, umfassend eine mit Unterdruck beaufschlagbare Unterdruckleitung (14), die von dem Entstehungsort ausgeht und in der ein Absaugventil (16) angeordnet ist, wobei die Unterdruckleitung im Bereich des Entstehungsortes einen Querschnitt q₁ aufweist,
**dadurch gekennzeichnet,**
**dass** in der Unterdruckleitung (14) zwischen dem Entstehungsort (10) und dem Absaugventil (16) ein Entspannungsbehälter (32) angeordnet ist, dessen Querschnitt q₂ beträgt q₂ » q_{1,} wie etwa q₂ ≥ 5q_{1,} wobei die Unterdruckleitung (14) mit dem Entspannungsbehälter in dessen unterem Bereich verbunden ist.

2. Unterdruckabwassereinrichtung nach Anspruch 1,
**dadurch gekennzeichnet,**
**dass** der Entspannungsbehälter (32) in unmittelbarer Nähe von zum Fördern des Abwassers angesaugter Luft angeordnet ist, insbesondere unmittelbar hinter dem Entstehungsort (10) in der Unterdruckleitung (14) angeordnet ist.

3. Untedruckabwassereinrichtung nach Anspruch 1 oder 2,
**dadurch gekennzeichnet,**
**dass** der Entstehungsort eine Toilettenschüssel (10) ist, von deren Auslass (12) ein in den Entspannungsbehälter (32) übergehende Anschluss (34) als Abschnitt der Unterdruckleitung (14) ausgeht

4. Unlerdruckabwassereinrichtung nach Anspruch 3,
**dadurch gekennzeichnet,**
**dass** die Toilettenschüssel (10) im Bereich einer Trennwand (19) eines Raumes angeordnet ist, dass zwischen der Trennwand und der Toilettenschüssel der Entspannungsbehälter (32) angeordnet ist und dass das Absaugventil (16) im Bezug auf die Toilettnschüssel (10) hinter der Trennwand angeordnet ist.

5. Unterdruckabwassereinrichung nach Anspruch 1 oder 2,
**dadurch gekennzeichnet, dass** der Entstehungsort eine Toilettenschüssel (10) ist, und der Entspannungsbehälter (32) in der Toilettenschüssel (10) bzw. in deren
Auslauf integriert ist.

6. Unterdruckabwassereinrichtung noch zumindest einem der vorhergehenden Ansprüche,
**dadurch gekennzeichnet,**
**dass** der Entspannungsbehälter (32) ein Abschnitt der Unterdruchleitung (14) ist, wobei der Abschnitt einen größeren Querschnitt als die Unterdruckleitung aufweist.

7. Unterdruckabwassereinrichtung nach zumindest einem der vorhergehenden Ansprüche,
**dadurch gekennzeichnet,**
**dass** der Entspannungsbehälter (32) eine Zylinderform aufweist, deren Längsachse parallel zu den in diesen mündenden Abschnitten (34, 36) der Unterdrucklcitung (14) verläuft, wobei insbesondere die Längsachse horizontal oder in etwa horizontal verläuft.

8. Unterdruckabwassereinrichtung nach Anspruch 7,
**dadurch gekennzeichnet,**
**dass** der jeweilige mit dem Entspannungsbehälter (32) verbundene Abschnitt (34, 36) der Unterdruckleitung (14) von einer der Stirnflächen (38, 40) des insbesondere eine Zylinderform aufweisenden Entspannungsbehalters (32) ausgeht, und insbesondere die Sohle des Abschnitts (34, 36) der Unterdruckleitung (14) bündig oder nahezu bündig in Sohle des Entspannungsbehälters (32) übergeht.

9. Unterdruckbwaseeinrichtung nach zumindest einem der vorhergehenden Ansprüche,
**dadurch gekennzeichnet,**
**dass** der Querschnitt q₂ des Entspannungsbehälters (32) beträgt in etwa q₂ ≥ 5 q₁, insbesondere etwa q₂ ≥ 10 q₁ vorzugsweise in etwa 5 q₁ ≤ q₂ ≤ 20 q₁, insbesondere 8 q₁ ≤ q₂ ≤ 13 q₁.

10. Unterdruckabwassereinrichtung nach Anspruch 7,
**dadurch gekennzeichnet,**
**dass** das Volumen V des Entspannungsbehälters (32) beträgt in etwa 5 q₁ x 2 d₁ ≤ V ≤ 15 q₁ x 4 d₁, insbesondere 10 q₁ x 2 d₁ ≤ V ≤ 10 q₁ x 3 d₁, wobei d₁ mittlerer Durchmesser der in dem Entspannungsbehälter (32) mündenden Abschnitte (34,36) der Unterdruckleitung (14) ist.

## Claims

1. Negative pressure waste device for extraction of waste produced at a point of origin (10), such as a sanitary facility, in particular a toilet bowl, comprising a negative pressure pipe (14) which can be subjected to negative pressure and extends from a point of origin and in which a suction valve (16) is arranged, the negative pressure pipe having in the area of the point of origin a cross-section q₁,
**wherein**
a relief tank (32) whose cross-section q₂ is q₂ >> q₁, such as q₂ ≥ 5q₁, is arranged in the negative pressure pipe (14) between the point of origin (10) and the suction valve (16), the negative pressure pipe (14) being connected to the relief tank in its lower area.

2. Negative pressure waste device according to Claim 1,
**wherein**
the relief tank (32) is arranged in the immediate vicinity of air sucked in for conveying the waste, in particular arranged directly behind the point of origin (10) in the negative pressure pipe (14).

3. Negative pressure waste device according to Claim 1 or 2,
**wherein**
the point of origin is a toilet bowl (10) from whose outlet (12) a connection (34) merging into the relief tank (32) extends as a section of the negative pressure pipe (14).

4. Negative pressure waste device according to Claim 3,
**wherein**
the toilet bowl (10) is arranged in the area of a partition wall (19) of a room, wherein the relief tank (32) is arranged between the partition wall and the toilet bowl, and wherein the suction valve (16) is arranged behind the partition wall relative to the toilet bowl (10).

5. Negative pressure waste device according to Claim 1 or 2,
**wherein**
the point of origin (10) is a toilet bowl and the relief tank (32) is integrated in the toilet bowl (10) or in its outlet.

6. Negative pressure waste device according to at least one of the preceding claims,
**wherein**
the relief tank (32) is a section of the negative pressure pipe (14), the section having a larger cross-section than the negative pressure pipe.

7. Negative pressure waste device according to at least one of the preceding claims,
**wherein**
the relief tank (32) has a cylinder shape whose longitudinal axis runs parallel to the sections (34, 36) of the negative pressure pipe (14) emptying into it, where in particular the longitudinal axis runs horizontally or approximately horizontally thereto.

8. Negative pressure waste device according to Claim 7,
**wherein**
the respective section (34, 36) of the negative pressure pipe (14) connected to the relief tank (32) extends from one of the end faces (38, 40) of the relief tank (32) having in particular a cylinder shape, and in particular the bottom of the section (34, 36) of the negative pressure pipe (14) merges flush or almost flush into the bottom of the relief tank (32).

9. Negative pressure waste device according to at least one of the preceding claims,
**wherein**
the cross-section q₂ of the relief tank (32) is approximately q₂ ≥ 5q₁, in particular approximately q₂ ≥ 10q₁, preferably approximately 5q₁ ≤ q₂ ≤ 20q₁, in particular 8q₁ ≤ q₂ ≤ 13q₁.

10. Negative pressure waste device according to Claim 7,
**wherein**
the volume V of the relief tank (32) is approximately 5q₁ x 2d₁ ≤ V ≤ 15q₁ x 4d₁, in particular 10q₁ x 2d₁ ≤ V ≤ 10q₁ x 3d₁, where d₁ is the mean diameter of the sections (34, 36) of the negative pressure pipe (14) opening into the relief tank (32).

## Revendications

1. Dispositif à dépression pour eaux usées, destiné à aspirer des eaux usées produites à un lieu de formation (10), tel qu'un dispositif sanitaire, en particulier une cuvette de WC, comprenant une conduite à dépression (14) mise en dépression partant du lieu de formation et dans laquelle est placée une vanne d'aspiration (16), sachant que dans la zone du lieu de formation, la conduite à dépression présente une section transversale q₁,
**caractérisé en ce**
**que** dans la conduite à dépression (14) entre le lieu de formation (10) et la vanne d'aspiration (16) est disposé un réservoir de détente (32) dont la section transversale q₂ est telle que q₂ >> q₁, par exemple q₂ ≥ 5 q₁, sachant que la conduite à dépression (14) est reliée au réservoir de détente dans la partie inférieure de celui-ci.

2. Dispositif à dépression pour eaux usées selon la revendication 1,
**caractérisé en ce**
**que** le réservoir de détente (32) est placé à proximité immédiate de l'air aspiré pour refouler les eaux usées, en particulier dans la conduite à dépression (14) directement derrière le lieu de formation (10).

3. Dispositif à dépression pour eaux usées selon la revendication 1 ou 2,
**caractérisé en ce**
**que** le lieu de formation est une cuvette de WC (10), de la sortie (12) de laquelle part un raccord (34) se prolongeant dans le réservoir de détente (32) en formant un tronçon de la conduite à dépression (14).

4. Dispositif à dépression pour eaux usées selon la revendication 3,
**caractérisé en ce**
**que** la cuvette de WC (10) est disposée dans la zone d'une cloison (19) d'un local, que le réservoir de détente (32) est disposé entre la cloison et la cuvette de WC, et que la vanne d'aspiration (16) est disposée derrière la cloison par rapport à la cuvette de WC (10).

5. Dispositif à dépression pour eaux usées selon la revendication 1 ou 2,
**caractérisé en ce**
**que** le lieu de formation est une cuvette de WC (10), et le réservoir de détente (32) est intégré dans la cuvette de WC (10) ou dans sa conduite d'évacuation.

6. Dispositif à dépression pour eaux usées selon au moins l'une des revendications précédentes,
**caractérisé en ce**
**que** le réservoir de détente (32) est un tronçon de la conduite à dépression (14), sachant que le tronçon présente une plus grande section transversale que la conduite à dépression.

7. Dispositif à dépression pour eaux usées selon au moins l'une des revendications précédentes,
**caractérisé en ce**
**que** le réservoir de détente (32) présente une forme cylindrique, dont l'axe longitudinal s'étend parallèlement aux tronçons (34, 36) de la conduite à dépression (14) qui débouchent dans celui-ci, sachant que l'axe longitudinal est horizontal ou approximativement horizontal.

8. Dispositif à dépression pour eaux usées selon la revendication 7,
**caractérisé en ce**
**que** chaque tronçon (34, 36) de la conduite à dépression (14) relié au réservoir de détente (32) part d'une des faces frontales (38, 40) du réservoir de détente (32) présentant en particulier un forme cylindrique, et qu'en particulier le fond du tronçon (34, 36) de la conduite à dépression (14) se transforme en fond du réservoir de détente (32) en restant au même niveau ou approximativement au même niveau.

9. Dispositif à dépression pour eaux usées selon au moins l'une des revendications précédentes,
**caractérisé en ce**
**que** la section transversale q₂ du réservoir de détente (32) est telle qu'approximativement q₂ ≥ 5 q₁, en particulier approximativement q₂ ≥ 10 q₁, de préférence approximativement 5 q₁ ≤ q₂ ≤ 20 q₁, en particulier 8 q₁ ≤ q₂ ≤ 13 q₁.

10. Dispositif à dépression pour eaux usées selon la revendication 7,
**caractérisé en ce**
**que** le volume V du réservoir de détente (32) est tel qu'approximativement 5 q₁ × 2 d₁ ≤ V ≤ 15 q₁ × 4 d₁, en particulier 10 q₁ × 2 d₁ ≤ V ≤ 10 q₁ × 3 d₁, où d₁ est le diamètre moyen des tronçons (34, 36) de la conduite à dépression (14) qui débouchent dans le réservoir de détente (32).
